# DEMANDE DE BREVET EUROPEEN

(11) **EP 1 016 954 A1**
(43) Date de publication de la demande: **05.07.2000**
(21) Numéro de dépôt: 99630078.6
(22) Date de dépôt: 22.10.1999
(51) Int. Cl.: G06F 3/023

(54) **Kit de mise à niveau d'un système numérique de traitement de données**

(30) Priorité: 30.12.1998 LU 90335
(71) Demandeur: Vitec S.A., 1143 Luxembourg (LU)
(72) Inventeur: Aubry, Eric, 2620 Luxemberg (LU)
(74) Mandataire: Waxweiler, Jean

(57) **Abrégé**

L'invention concerne un kit de mise à niveau d'un système numérique de traitement de données, tel qu'un ordinateur, PC, ou computer, pour l'intégration en utilisation directe du clavier d'un symbole supplémentaire non-existant, par exemple le symbole monétaire de l'Euro. Il comprend un support de logiciel sur lequel est enregistré le logiciel de mise à niveau pour l'utilisation d'un symbole supplémentaire sur une touche du clavier, et une touche de clavier à interchanger sortant en supplément la représentation du symbole supplémentaire.

## Description

L'invention concerne un kit de mise à niveau d'un système numérique de traitement de données, tel qu'un ordinateur, PC ou computer, pour l'intégration en utilisation directe au clavier d'un symbole supplémentaire non-existant, par exemple le symbole monétaire de l'Euro.

La mise en vigueur de l'Euro intervient début 1999. Or à ce jour l'unité monétaire, qui est représentée par un symbole (au même titre que le dollar ou la livre) n'existe pas dans les systèmes informatiques. Que ce soit dans les travaux de dactylographie, de comptabilité, de commerce ou de correspondance, la seule façon de le transcrire est de l'écrire en littérale, ou de gérer une représentation complexe.

Le but de l'invention est de proposer un moyen pour une modification toute simple qui, faite une seule fois, modifie ou complète le système informatique pour rendre résidente la fonction supplémentaire, sus désignée, permettant surtout une remise à niveau simple de toutes les machines existantes à un certain moment, comme par exemple l'entrée en vigueur de l'Euro.

Selon l'invention ce but sera réalisé par un support de logiciel sur lequel est enregistré le logiciel de mise à niveau pour l'utilisation d'un symbole supplémentaire sur une touche du clavier, et une touche de clavier à interchanger portant en supplément la représentation du symbole supplémentaire.

Par l'adjonction du module logiciel au logiciel du système numérique de traitement de données ou en périphérie du système d'exploitation, et le remplacement d'une touche physique sur le clavier, tous les appareils seront alors dotés d'une fonction permettant par une simple touche d'éditer le symbole supplémentaire, par exemple l'Euro. La modification s'effectue en une seule fois et devient résidente dans la machine du système.

Les claviers des systèmes numériques sont dotés de touches à fonctionnement combiné. Une pression sur une touche édite un chiffre ou un symbole; une combinaison de touches (ex: Maj+touche ou Alt+touche etc.) permet de multiples interprétations.

Sur les claviers d'ordinateurs on relève de 1 à 4 fonctions par touche. Quand on veut reproduire un symbole supplémentaire, comme par exemple l'Euro, on décide de dédier une touche non surchargée (par exemple la touche 1 ou la touche ^) au symbole supplémentaire. Le caractère Euro trouve sa place sur la touche retenue. Plusieurs choix possibles peuvent être proposés à l'opérateur au moment de la remise à niveau du système informatique.

Le déroulement de l'opération de mise à niveau se passera comme suit:

L'opérateur choisit dans le panel de possibilités proposées la position affectée au symbole Euro, ou tout autre symbole supplémentaire à reproduire par le système. Il insert un support logiciel qui sera du type: disquette floppy, CD Rom, téléchargement ou autre, et lance la routine de mise à niveau logiciel. Il dépose mécaniquement la touche définie et la remplace par la nouvelle de même format intégrant en plus des symboles de la touche définie, la gravure ou représentation du symbole Euro. Il réinitialise le système informatique et la nouvelle fonction de frappe est disponible et résidente.

L'invention pourra être mise dans le commerce sous forme d'un kit composé d'un support logiciel pour la mise à niveau software d'un système informatique et d'une touche plastique, ou autre, moulée gravée avec le symbole supplémentaire pour la mise à niveau hardware du système. Ce kit pourra être distribué en sous-ensemble séparé.

Le principe fonctionnel du logiciel mémorisé sur le support logiciel est le suivant:

Il s'agit d'un driver ou pilote de clavier universel ou à paramétrer en fonction de la marque du matériel objet de la remise à niveau. Le driver interprète la nouvelle fonction. Il est proposé d'utiliser le nouveau symbole sur le principe des codes ASCII sans pourtant être limité à ce principe. Un libellé de caractère disponible (ex CHR (32) ou extension à ajouter au tableau actuel) sera retenu. Ainsi non seulement le clavier, mais également les logiciels pourront utiliser directement le caractère Euro sous sa forme de symbole.

L'invention permettra surtout et non seulement les applications de mise à niveau des matériels existants en exploitation ou non, mais aussi des machines nouvelles à produire. L'invention peut être rendue accessible sur tous les systèmes d'exploitation et sur toutes les marques de matériel et sur toutes les formes de clavier équipant des systèmes numériques.

## Revendications

1. Kit de mise à niveau d'un système numérique de traitement de données, tel qu'un ordinateur, PC, ou computer, pour l'intégration en utilisation directe du clavier d'un symbole supplémentaire non-existant, par exemple le symbole monétaire de l'Euro, caractérisé par un support de logiciel sur lequel est enregistré le logiciel de mise à niveau pour l'utilisation d'un symbole supplémentaire sur une touche du clavier, et une touche de clavier à interchanger portant en supplément la représentation du symbole supplémentaire.

2. Kit selon la revendication 1, caractérisé en ce que ledit logiciel de mise à niveau comporte un driver universel.

3. Kit selon la revendication 1, caractérisé en ce que ledit logiciel de mise à niveau comporte un driver à paramétrer en fonction du système numérique de traitement de données à mettre à niveau.
